# EUROPEAN PATENT APPLICATION

(11) **EP 4 360 961 A1**
(43) Date of publication of application: **01.05.2024**
(21) Application number: 22203628.7
(22) Date of filing: 25.10.2022
(51) Int. Cl.: B60R 19/34, B60R 19/48, B60D 1/56

(54) **CRASH MANAGEMENT SYSTEM FOR A MOTOR VEHICLE**

(71) Applicant: Constellium Singen GmbH, 78224 Singen (DE)
(72) Inventor: JAEKLE, Dominik, 78234 ENGEN (DE)
(74) Representative: Constellium - Propriété Industrielle

(57) **Abstract**

The invention relates to a crash management system (100) for a motor vehicle, the crash management system (100) comprising a crossbeam (10) extending essentially along a transverse direction (Y), the crossbeam (10) having two crash boxes (12) arranged at a distance from one another, the crossbeam (10) being fixable to a vehicle structure by means of the two crash boxes (12), and the crash management system (100) comprising a receiving element (30; 30a; 30b) for a towing lug protruding with a first subsection (31; 31a; 31b) into the cross section of the crash box (12), the receiving element (30; 30a; 30b) having two flange-like extensions (36; 36a; 36b) on opposite sides, the extensions (36) overlapping with a front side (23) of the crash box (12) in the direction of a longitudinal axis (34) of the extensions (36; 36a; 36b).

## Description

### FIELD OF THE INVENTION

The invention relates to a crash management system for a motor vehicle which is characterized by a particularly advantageous arrangement of a receiving means for a towing lug, in particular also in connection with vehicles having a relatively high weight, such as electric vehicles or SUVs.

### BACKGROUND

A crash management system for a motor vehicle having the features of the preamble of the two independent claims is known from DE 10 2016 000 948 B4. The known crash management system is characterized by a receiving element for a towing lug, which has two flange-like extensions which extend in the transverse direction of the crossbeam and which laterally protrude beyond the side walls of a crash box. The extensions are in particular arranged between the front side of the crash box facing the extensions and a rear flange of the crossbeam, the receiving element simultaneously serving as fastening element for the crossbeam on the crash box. To this end, a plurality of fastening screws or the like are provided, by means of which the mentioned components are connected or screwed to one another. A separate insert component, which is arranged in the area of a longitudinal bore of the receiving element, is furthermore provided for fastening the towing lug in the receiving element.

### DESCRIPTION OF THE INVENTION

The crash management system according to the invention for a motor vehicle having the features of the two independent claims has the advantage that an optimized or relatively simple connection of the crossbeam to the crash box is made possible on the one hand, and that the forces acting on the vehicle during a towing process are introduced very well into the crash management system, i.e. into the crossbeam and the crash box, by means of an advantageous arrangement and formation of the receiving element for the towing lug, on the other hand. This makes it possible to advantageously also use the crash management system according to the invention for vehicles which have a relatively high weight, for example electric vehicles or SUVs with a typical weight of over 2 to. The arrangement of the receiving element for the towing lug can thereby either take place in the front area and/or in the rear area of the vehicle.

The invention is based on the idea of - contrary to the above-mentioned background art - connecting the crossbeam directly to the crash box, i.e. without functional inclusion of the receiving element on the one hand, and of providing for a large-surface introduction of forces, which are introduced into the crossbeam and the crash box via the receiving element, on the other hand. For this purpose, the first object of the invention is a the crash management system for a motor vehicle, comprising a crossbeam extending essentially along a transverse direction, the crossbeam having two crash boxes arranged at a distance from one another, the crossbeam being fixable to a vehicle structure by means of the two crash boxes and the crash management system comprising a receiving element for a towing lug protruding with a first subsection into the cross section of the crash box, the receiving element having two flange-like extensions on opposite sides, the extensions overlapping with a front side of the crash box in the direction of a longitudinal axis of the extensions, and the extensions being in contact with the crash box on one side in a longitudinal direction of the receiving element wherein in the area of the extensions, the crash box has recesses which receive the extensions in the longitudinal direction, that the crash box directly contacts the crossbeam on the side facing the crossbeam, and that the extensions are in contact with the crossbeam on the side facing away from the crash box.

The second object of the invention is a crash management system for a motor vehicle, comprising a crossbeam extending essentially along a transverse direction, the crossbeam having two crash boxes arranged at a distance from one another, the crossbeam being fixable to a vehicle structure by means of the two crash boxes and the crash management system comprising a receiving element for a towing lug protruding with a first subsection into the cross section of the crash box, the receiving element having two flange-like extensions on opposite sides, the extensions overlapping with a front side of the crash box in the direction of a longitudinal axis of the extensions and extensions being in contact with the crash box on one side in a longitudinal direction of the receiving element wherein in the area of the extensions the crash box has recesses, which receive the extensions in the longitudinal direction that the crash box directly contacts the crossbeam on the side facing the crossbeam, and that the extensions contact a flange plate of the crash box on the side of the crash box facing away from the crossbeam.

Advantageous embodiments of the crash management system according to the invention are indicated in the dependent claims.

In the case of the latter crash management system, it can be provided for the clearly defined and reliable positioning of the receiving element in the cross section of the crash box that the receiving element has a second subsection which protrudes into a passage opening of the flange plate and which is preferably received in a positive manner in the passage opening.

To position the receiving element exactly in the intended area of the cross section of the crash box and to thus provide for a clearly defined position of the receiving element, it can additionally be provided that the recesses in the crash box are adapted to the cross sections of the extensions, the extensions thus being received at least approximately in a positive manner in the recesses. The geometry of the recesses is in particular adapted to the geometry of the extensions in such a manner that the extensions are received in the crash box with the smallest possible gap or in contact with the recesses (taking manufacturing tolerances into account).

It is furthermore preferred that the extensions laterally protrude beyond the cross section of the crash box, or that the extensions laterally protrude beyond the cross section of the crash box on the side facing the flange plate. As will be described in more detail below, this makes it possible to connect the extensions to the crash box via welded connections, gaps, which may be present between the recesses in the crash box and the extensions, thus being bridged or a noise development, which may be associated therewith, thus being avoidable.

A further preferred design of the crash management system for the clearly defined positioning of the receiving element in the cross section of the crash box provides that the receiving element has positioning means for positioning the receiving element in the direction of the longitudinal axis of the extensions to the crash box. These positioning means are preferably formed as steps or lips formed on the extensions, the steps or lips being arranged within the cross section of the crash box in contact with the crash box.

To facilitate the assembling or the assembly of the towing lug in the receiving element, and to furthermore provide for an optimized introduction of force into the receiving element, it is furthermore provided that, on the side of the extensions opposite the first subsection protruding into the crash box, the receiving element has a second subsection which protrudes through an opening in the crossbeam into the cross section of the crossbeam.

In a particularly preferred manner for the simple manufacture of the receiving element, the latter is formed as an extrusion component and is made of aluminum or an aluminum alloy. To receive a towing lug, it further has a receiving section, which is formed by machining, for the towing lug. A formation of this type makes it possible to separate the receiving element from an (endless) strand of the extrusion component, and to subsequently form the receiving section for the towing lug by forming a bore and a threaded section. A solution of this type furthermore has the advantage that the towing lug is connected directly to the receiving element in the receiving element, i.e. in contrast to the above-mentioned background art without an additional component.

It is furthermore advantageous when the crash boxes as well as the crossbeam are made of aluminum or an aluminum alloy. This does not only make it possible to form the mentioned components with relatively low weight, but furthermore makes it possible to connect at least the crash box to the crossbeam by means of at least one weld.

It is particularly preferred when, as described above, the receiving element is made of aluminum or an aluminum alloy, because the weld or the welded connection between the crash box and the crossbeam can additionally be used in this case to connect the receiving element in the area of its extensions to the crash box and/or to the crossbeam.

In terms of a weight which is as low as possible or of a cross section of the receiving element which is as small as possible, the latter furthermore has a rectangular, preferably a square cross section in the area outside of the (rectangular) extensions.

Other advantages, features, and details of the invention are apparent from the following description of preferred embodiments of the invention and from the drawings.

### DESCRIPTION OF THE DRAWING:

- Fig. 1: shows a partially transparent illustration of a subarea of a crash management system comprising a crossbeam which can be fastened to a vehicle structure via a crash box,
- Fig. 2: shows a perspective view onto the subarea of the crash management system according to Fig. 1 from a direction which differs from that of Fig. 1,
- Fig. 3: shows a perspective illustration of a receiving element for the use in a crash management system,
- Fig. 4 and Fig. 5: in each case show a perspective illustration of a receiving element, modified compared to Fig. 3, for arrangement in the area of a flange plate of a crash box,
- Fig. 6: shows a partially transparent illustration of a crash management system using the receiving element according to Fig. 4 or 5, and
- Fig. 7 and Fig. 8: show perspective, partially transparent rear views onto parts of a crash management system using the receiving elements according to Figs. 4 and 5.

### DETAILED DESCRIPTION OF THE INVENTION

Identical elements or elements having the same function are provided with the same reference numerals in the figures.

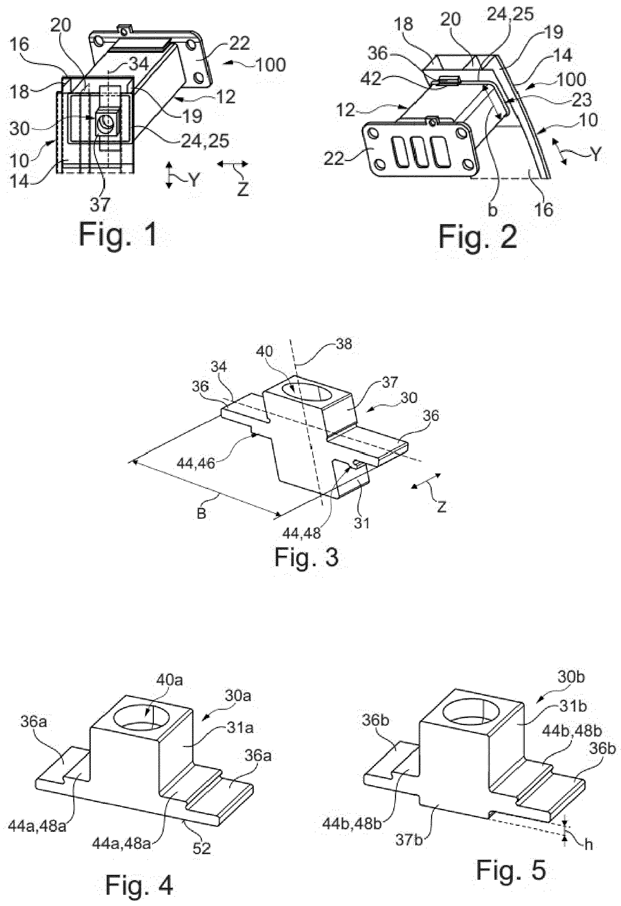

The components of a crash management system 100, as it is provided in the area of a vehicle front or of a vehicle rear of a motor vehicle, are illustrated in Figs. 1 and 2. The motor vehicle is in particular, but not by way of limitation, a motor vehicle with a relatively high weight, such as an electric vehicle or an SUV.

Crash management system 100 has a crossbeam 10 which can be fastened to a vehicle structure (not shown), in particular to longitudinal beams of the motor vehicle, by means of two crash boxes 12 which are arranged at a distance from one another with respect to a transverse direction Y of crossbeam 10. For reasons of simplification, only one of the two crash boxes 12 is illustrated in Figs. 1 and 2.

Crossbeam 10 is preferably formed as an extrusion component made of aluminum or an aluminum alloy and can be formed either in a straight line or curved in sections or completely curved, as it is known per se from the background art.

In the illustrated exemplary embodiment, the crossbeam 10 comprises, on the side facing away from crash box 12, a front flange 14, a rear flange 16 arranged on the side of crash box 12, and two outer flanges 18, 19 connecting front flange 14 to rear flange 16. A transverse wall 20, which runs parallel to the two outer flanges 18, 19, is furthermore arranged in an exemplary manner in the area of the cross section of crossbeam 10, the cross section of crossbeam 10 thus being formed as a 2-chamber profile.

Crash box 12 is likewise preferably made of aluminum or an aluminum alloy and has an essentially rectangular cross section. On the side facing away from crossbeam 10, crash box 12 is connected to a flange plate 22, for example by means of a welded connection (not shown), in order to connect crash box 12 and crossbeam 10 to the mentioned vehicle structure of the motor vehicle, for example via screw connections.

With its rear flange 16, crossbeam 10 contacts front side 23 of crash box 12 facing the latter, and is connected to crash box 12 via a welded connection 24 which comprises at least one weld 25. The at least one weld 25 can be formed as continuous, but also as interrupted weld 25.

Crash management system 100 furthermore comprises a receiving element 30, which, in the towing case of the motor vehicle, is formed to receive a towing lug (not shown) which is known per se from the prior art, or which serves to fasten the towing lug.

Receiving element 30 illustrated in individual illustration in Fig. 3 is also preferably made of aluminum or an aluminum alloy and is formed as an extrusion component. The extrusion direction of receiving element 30 runs in a vertical direction Z, which runs perpendicular to transverse direction Y of crossbeam 10.

Receiving element 30 has a first subsection 31 which protrudes into the cross section of crash box 12. Receiving element 30 furthermore has a second subsection 37 which protrudes into the cross section of crossbeam 10 via an opening which is formed in rear flange 16 of crossbeam 10 and which is adapted to the cross section of first subsection 37. The outer cross sections of the two subsections 31, 37 are preferably formed identically. A rectangular, in particular a square outer cross section of receiving element 30 is preferred in the area of its two subsections 31, 37.

Between the two subsections 31, 37 of receiving element 30, the latter has two flange-like extensions 36 which are arranged on opposite sides of receiving element 30 and which are preferably formed identically. Extensions 36 extend along a longitudinal axis 34, which runs parallel to transverse direction Y of crossbeam 10, and overlap the cross section of crash box 12.

In a longitudinal direction 38, a receiving section 40 for the towing lug (not shown) is furthermore formed in receiving element 30. The receiving section 40 created by means of a machining manufacturing process furthermore has a threaded section (not shown) which is known per se and which cooperates with an external thread formed on the towing lug so as to be able to screw the towing lug directly into or to fasten it to receiving element 30.

The cross section of the two extensions 36 is rectangular. Width B of receiving element 30 in the area of the two extensions 36 is greater than width b of crash box 12 in the area of extensions 36.

To receive or to fasten receiving element 30, in particular the two extensions 36, the crash box 12 has, in the area of its front side 23 facing crossbeam 10, two rectangular recesses 42 which are adapted to the shape or the cross section of extensions 36 in such a manner that the two extensions 36 are received at least approximately in a positive manner in the two recesses 42. As can be seen particularly clearly based on Fig. 2, the two extensions 36 protrude laterally beyond crash box 12 and with their top sides, which face crossbeam 10, preferably contact rear flange 16 of crossbeam 10 or are arranged while forming only a small gap to crossbeam 10. It can furthermore be seen based on Fig. 2 that, with its weld 25, welded connection 24 is formed in such a manner that weld 25 connects the two extensions 36 on the side facing away from crossbeam 10 to recesses 42 in crash box 12.

Receiving element 30 has positioning means 44 which serve the purpose of positioning receiving element 30 in the cross section of crash box 12. On the bottom side of extensions 36 facing crash box 12, extension 36 can for this purpose either have a step 46, as can be seen based on Fig. 3, or a lip 48 molded integrally to extension 36. When receiving element 30 is assembled on crash box 12, extension 36 as well as lip 48 protrude into the cross section of crash box 12 in such a manner that step 46 or extension 36 is arranged in contact with an inner side of the cross section of crossbeam 10.

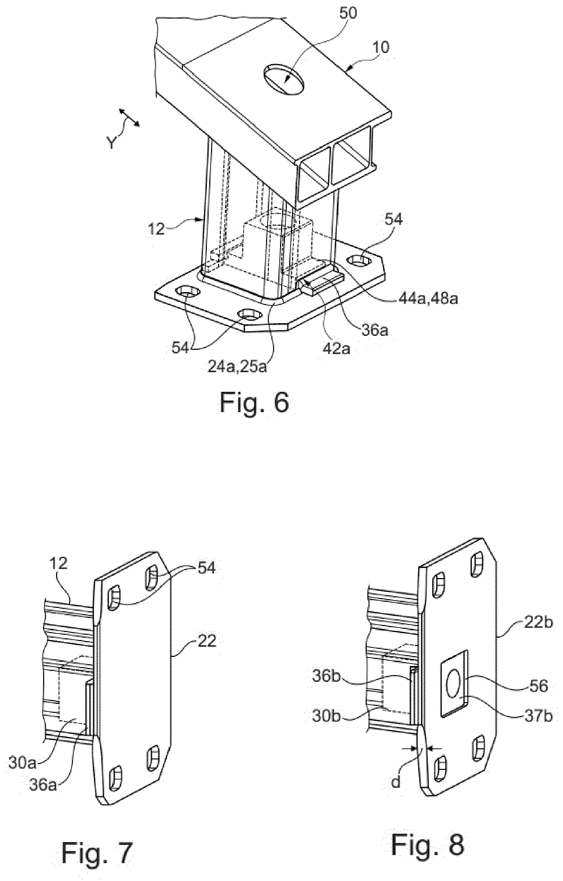

Modified receiving elements 30a and 30b, which can be arranged between crash box 12 and flange plate 22 (Fig. 7) or a flange plate 22b (Fig. 8), i.e. on the side of crash box 12 facing away from crossbeam 10, are illustrated in Figs. 4 and 5 in individual illustration.

In contrast to receiving element 30, receiving element 30a does not have a second subsection 37, but only first subsection 31a. First subsection 31a furthermore has receiving section 40a for receiving the towing lug.

According to the illustration of Figs. 6 and 7, first subsection 31a of receiving element 30a protrudes into a cavity of crash box 12, receiving section 40a being accessible via a passage opening 50 formed in crossbeam 10 for the towing lug (not shown). It can furthermore be seen that the two lateral extensions 36a pass through recesses 42a of crash box 12, and positioning means 44a or lips 48a position or center receiving element 30a within the cross section of the crash box 12 in transverse direction Y of crossbeam 10. Due to a flat rear surface 52 of receiving element 30a, rear surface 52 contacts the side of flange plate 22 facing receiving element 30a, flange plate 22 thus being formed as closed flange plate 22 according to the view of Fig. 7 with the exception of passage bores 54 serving the purpose of fastening flange plate 22 to a vehicle structure (longitudinal beam). A welded connection 24a comprising at least one weld 25a, which also forms a connection between extensions 36a and the side surfaces of crash box 12 in an exemplary manner, is provided between flange plate 22 and crash box 12.

Receiving element 30b differs from receiving element 30a in an additional second subsection 37b on the side of extensions 36b opposite first subsection 31b. Second subsection 37b has a height h which corresponds to thickness d of flange plate 22b (Fig. 8). In a similar manner than for receiving element 30a, a welded connection 24a comprising at least one weld 25a, which also forms a connection between extensions 36a and the side surfaces of crash box 12 in an exemplary manner, is provided between flange plate 22b and crash box 12. Flange plate 22b has a passage opening 56 which is adapted to the cross section of second subsection 37b and in which second subsection 37b is received in a positive manner or with a small lateral gap.

It is additionally mentioned that in the case of the receiving element 30b it can also be provided to forgo positioning means 44b or lips 48b and to realize the positioning of receiving element 30b to crash box 12 solely via a positive reception of second subsection 37b in passage opening 56 of flange plate 22b.

This described crash management system 100 or receiving element 30 for the towing lug can be altered or modified in various ways without departing from the idea of the invention.

### List of references:

- 10: crossbeam
- 12: crash box
- 14: front flange
- 16: rear flange
- 18: outer flange
- 19: outer flange
- 20: transverse wall
- 22: flange plate
- 22b: flange plate
- 23: front side
- 24: welded connection
- 24a: welded connection
- 25: weld
- 25a: weld
- 30: receiving element
- 30a: receiving element
- 30b: receiving element
- 31: 1. subsection
- 31a: 1. subsection
- 31b: 1. subsection
- 34: longitudinal axis
- 36: extension
- 36a: extension
- 36b: extension
- 37: 2. subsection
- 37b: 2. subsection
- 38: longitudinal direction
- 40: receiving section
- 40a: receiving section
- 42: recess
- 42a: recess
- 44: positioning means
- 44a: positioning means
- 44b: positioning means

- 46: step
- 48: lip
- 48a: lip
- 48b: lip
- 50: passage opening
- 52: rear surface
- 54: passage bore
- 56: passage opening

- 100: crash management system

- B: width
- b: width
- h: height
- d: thickness
- Y: transverse direction
- Z: vertical direction

## Claims

1. A crash management system (100) for a motor vehicle, the crash management system (100) comprising a crossbeam (10) extending essentially along a transverse direction (Y), the crossbeam (10) having two crash boxes (12) arranged at a distance from one another, the crossbeam (10) being fixable to a vehicle structure by means of the two crash boxes (12), and the crash management system (100) comprising a receiving element (30) for a towing lug protruding with a first subsection (31) into the cross section of the crash box (12), the receiving element (30) having two flange-like extensions (36) on opposite sides, the extensions (36) overlapping with a front side (23) of the crash box (12) in the direction of a longitudinal axis (34) of the extensions (36), and the extensions (36) being in contact with the crash box (12) on one side in a longitudinal direction (38) of the receiving element (30),
**characterized in that**
in the area of the extensions (36), the crash box (12) has recesses (42) which receive the extensions (36) in the longitudinal direction (38), that the crash box (12) directly contacts the crossbeam (10) on the side facing the crossbeam (10), and that the extensions (36) are in contact with the crossbeam (10) on the side facing away from the crash box (12).

2. A crash management system (100) for a motor vehicle, the crash management system (100) comprising a crossbeam (10) extending essentially along a transverse direction (Y), the crossbeam (10) having two crash boxes (12) arranged at a distance from one another, the crossbeam (10) being fixable to a vehicle structure by means of the two crash boxes (12), and the crash management system (100) comprising a receiving element (30a; 30b) for a towing lug protruding with a first subsection (31a; 31b) into the cross section of the crash box (12), the receiving element (30a; 30b) having two flange-like extensions (36a; 36b) on opposite sides, the extensions (36a; 36b) overlapping with a front side (23) of the crash box (12) in the direction of a longitudinal axis (34) of the extensions (36a; 36b), and extensions (36a; 36b) being in contact with the crash box (12) on one side in a longitudinal direction (38) of the receiving element (30a; 30b),
**characterized in that**
in the area of the extensions (36a; 36b) the crash box (12) has recesses (42a), which receive the extensions (36a; 36b) in the longitudinal direction (38), that the crash box (12) directly contacts the crossbeam (10) on the side facing the crossbeam (10), and that the extensions (36a; 36b) contact a flange plate (22; 22a) of the crash box (12) on the side of the crash box (12) facing away from the crossbeam (10).

3. The crash management system according to claim 2,
**characterized in that** the receiving element (30b) has a second subsection (37b) which protrudes into a passage opening (56) of the flange plate (22b) and which is preferably received in a positive manner in the passage opening (56).

4. The crash management system according to any one of claims 1 to 3,
**characterized in that** the recesses (42; 42a) are adapted to the cross sections of the extensions (36; 36a; 36b), the extensions (36; 36a; 36b) thus being received at least approximately in a positive manner in the recesses (42; 42a).

5. The crash management system according to any one of claims 1 to 4,
**characterized in that**
the extensions (36) laterally protrude beyond the cross section of the crash box (12) in the area a front side (23) of the crash box (12) facing the extensions (36), or that the extensions (36a; 36b) protrude laterally beyond the cross section of the crash box (12) on the side facing the flange plate (22; 22b).

6. The crash management system according to any one of claims 1 to 5,
**characterized in that**
the receiving element (30; 30a; 30b) has positioning means (44; 44a; 44b) for positioning the receiving element (30; 30a; 30b) in the cross section of the crash box (12).

7. The crash management system according to claim 6,
**characterized in that**
the positioning means (44; 44a; 44b) are formed as steps (46) or lips (48) formed on the extensions (36; 36a; 36b), the steps (46) or lips (48) being arranged within the cross section of the crash box (12) in contact with the crash box (12).

8. The crash management system according to claim 1,
**characterized in that**
on the side of the extensions (36) opposite the first subsection (31), the receiving element (30) has a second subsection (37) which protrudes through an opening in the crossbeam (10) into the cross section of the crossbeam (10).

9. The crash management system according to any one of claims 1 to 8,
**characterized in that**
the receiving element (30; 30a; 30b) is made of aluminum or an aluminum alloy, is formed as extrusion component, and has a receiving section (40; 40a), which is formed by machining, for a towing lug in order to receive the towing lug.

10. The crash management system according to claim 9,
**characterized in that**
the receiving section (40; 40a) has a threaded section in order to fasten the towing lug directly to the receiving element (30; 30a; 30b).

11. The crash management system according to any one of claims 1 to 10,
**characterized in that**
the crash box (12) and the crossbeam (10) are made of aluminum or an aluminum alloy.

12. The crash management system according to any one of claims 1 to 11,
**characterized in that**
at least the crash box (12) and the crossbeam (10) are connected to one another by means of a welded connection (24) having at least one weld (25).

13. The crash management system according to claim 12,
**characterized in that**
the at least one weld (25) is additionally formed at least between the extensions (36) of the receiving element (30) and the crash box (12).

14. The crash management system according to any one of claims 2 to 12,
**characterized in that**
the flange plate (22; 22b) is connected to the crash box (12) by means of at least one weld (25a), the at least one weld (25a) being additionally formed between the extensions (36a; 36b) of the receiving element (30a; 30b) and the crash box (12).

15. The crash management system according to any one of claims 1 to 14,
**characterized in that**
the cross section of the receiving element (30; 30a; 30b) is rectangular, preferably square, in the area outside of the extensions (36; 36a; 36b).
